# EUROPÄISCHE PATENTSCHRIFT

(11) **EP 2 769 113 B1**
(45) Veröffentlichungstag und Bekanntmachung des Hinweises auf die Patenterteilung: **25.05.2016**
(21) Anmeldenummer: 12766933.1
(22) Anmeldetag: 14.09.2012
(51) Int. Cl.: F16D 65/12

(54) **KRAFTFAHRZEUG - BREMSSCHEIBENTOPF**
MOTOR VEHICLE BRAKE DISC CHAMBER
CLOCHE DE DISQUE DE FREIN DE VÉHICULE AUTOMOBILE

(30) Priorität: 21.10.2011 DE 102011084947
(43) Veröffentlichungstag der Anmeldung: 27.08.2014
(73) Patentinhaber: Bayerische Motoren Werke Aktiengesellschaft, 80809 München (DE)
(72) Erfinder: KOKOTT, Kordian, 80992 München (DE)
(86) Internationale Anmeldenummer: PCT/EP2012/068131
(87) Internationale Veröffentlichungsnummer: WO 2013/056925

(56) Entgegenhaltungen:
- EP-A1- 0 726 406
- WO-A1-2013/056924
- DE-A1-102009 017 234
- DE-B4- 10 032 972
- DE-U1- 8 026 664

## Beschreibung

Die Erfindung betrifft einen Bremsscheibentopf für ein Kraftfahrzeug, nach dem Oberbegriff des ersten Anspruchs.

Es sind bereits Verbundbremsscheiben bekannt, mit Reibringen aus Grauguss, verbunden mit einem Bremsscheibentopf aus Leichtmetall. Die DE 100 32 972 B4 beschreibt eine solche gebaute Bremsscheibe, bei der Reibring und Topf über seperate Elemente, wie Stifte, Schrauben etc. zusammengefügt sind. Der Bremsscheibentopf weist dabei einen Boden, die Topfscheibe, eine umlaufende Wand, den Topfmantel und einen Rand, den Topfrand auf und ist aus einem höherfesten Stahlmaterial gefertigt. Am Topfrand ist der Reibring mittels Befestigungsmitteln, zum Beispiel Schrauben und/oder Nieten, befestigt.

Die WO 2013/056924 A1 der Anmelderin mit demselben Zeitrang der Priorität vom 21. 10. 2011 beansprucht eine Bremsscheibe für eine Scheibenbremse, die aus wenigstens einem Bremsscheibentopf und einem daran befestigten Reibring besteht, der mit von seinem Innendurchmesser nach innen gerichteten, insbesondere sechs bis zwölf, Zentrier- und/oder Befestigungsfortsätzen, in axialer Richtung stirnseitig auf Zentrieransätze des Bremsscheibentopfs aufgesetzt, an diesem, mittels in axialer Richtung verlaufenden Befestigungsmitteln, insbesondere Schrauben und/oder Nieten, festgelegt ist. Diese Bremsscheibe ist dadurch gekennzeichnet, dass die Zentrieransätze des Bremsscheibentopfs Ausnehmungen im Bremsscheibentopfrand oder im Bremsscheibentopfrand und im Bremsscheibentopfmantel sind, in die jeweils ein Zentrier- und/oder Befestigungsfortsatz des Reibrings hineinragt. Das Gebrauchsmuster DE 80 26 664 zeigt in der Figur eine aus Scheibe und Nabe zusammen vergossene Bremsscheibe mit einem konisch gestalteten Bremsscheibentopfmantel mit Aussparungen zum Zwecke der Gewichtsverminderung.

Aufgabe der vorliegenden Erfindung ist es, einen Bremsscheibentopf, vor allem für ein Kraftfahrzeug, bereitzustellen, der wenig Gewicht besitzt und trotzdem, vor allem auf Torsion, hoch belastbar ist.

Die Aufgabe wird erfindungsgemäß mit den Merkmalen des Anspruchs 1 gelöst. Weitere Ausgestaltungen der Erfindung ergeben sich aus den abhängigen Ansprüchen.

Nach der Erfindung ist ein Bremsscheibentopf mit einem zylindrischen Bremsscheibentopfmantel ohne Durchbrechungen dadurch gekennzeichnet, dass der Bremsscheibentopfmantel aus in Umfangsrichtung aneinander gereihten, abwechselnd um 180 Winkelgrad verdrehten Segmenten in der Form von gebogenen symmetrischen Trapezen besteht, die mit abwechselnd verschiedenem radialen Abstand zur Mittenlängsachse des Bremsscheibentopfmantels regelmäßig angeordnet sind. Das hat den Vorteil, dass konstruktiv ein besonders leichter Bremsscheibentopf gestaltet werden kann, bei gleichzeitigem vorteilhaftem Spannungsverlauf unter Belastung im Profil des Bremsscheibentopfmantels durch die Verwendung dieser Schubfelder in Trapezform.

Weitere vorteilhafte Ausführungsformen der Erfindung sind dadurch gekennzeichnet, dass an einem Bremsscheibentopfrand kurze Seiten der symmetrischen Trapeze jeweils bei Befestigungsmitteln für einen Befestigungsring zur Befestigung eines Reibrings liegen und diese symmetrischen Trapeze den geringeren Abstand zur Mittenlängsachse des Bremsscheibentopfmantels haben, und dass am Bremsscheibentopfrand die langen Seiten der symmetrischen Trapeze jeweils bei Ausnehmungen im Bremsscheibentopfrand für Befestigungsfortsätze des Reibrings liegen und diese symmetrischen Trapeze den größeren Abstand zur Mittenlängsachse des Bremsscheibentopfmantels haben.

Dadurch kann konstruktiv ein besonders leichter Bremsscheibentopf gestaltet werden, bei gleichzeitigem vorteilhaftem Spannungsverlauf im Profil des Bremsscheibentopfmantels durch die Verwendung dieser Schubfelder.

Weiterhin kann der Bremsscheibentopfmantel mindestens durch eine, sich in radialer Richtung erstreckende, Topfscheibe, insbesondere am vom Reibring entfernteren Ende des Bremsscheibentopfmantels, versteift sein, was ebenfalls zur Erhöhung der Festigkeit des Bremsscheibentopfes beiträgt.

Ist der Bremsscheibentopf aufgrund seines konstruktiven Aufbaus bezüglich seiner Festigkeitseigenschaften optimiert, so können der Bremsscheibentopfmantel und/oder die Topfscheibe auch aus einer Leichtmetalllegierung bestehen, was zu einer sehr großen Gewichtseinsparung führt. Wenn dann beide vorteilhafterweise zusammen in einem Arbeitsgang gegossen werden, ist die Herstellung des Bremsscheibentopfes sehr preiswert. Das Gewicht wird dadurch enorm reduziert im Vergleich zum Werkstoff Grauguss oder zu Stahlwerkstoffen.

Im Folgenden wird die Erfindung anhand eines Ausführungsbeispiels weiter erläutert. Erfindungswesentlich können sämtliche näher beschriebenen Merkmale sein. Es zeigen:
- Fig. 1:: eine Bremsscheibe mit einem erfindungsgemäßen Bremscheibentopf in räumlicher Darstellung,
- Fig.2:: den erfindungsgemäßen Bremsscheibentopf aus Figur 1 mit demontiertem Reibring in räumlicher Darstellung und
- Fig. 3:: den Reibring aus Figur 1 mit demontiertem Bremsscheibentopf in räumlicher Darstellung.

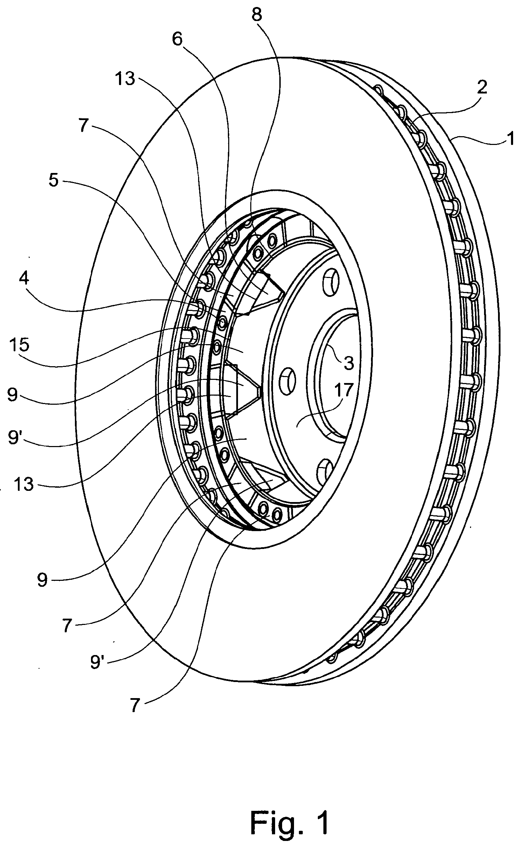

Die in den Figuren 1 bis 3 unterschiedlichen Maßstabes dargestellte Bremsscheibe 1 bzw. Bremsscheibentopf 3 bzw. Reibring 2 sind einer nicht gezeichneten Radnabe, um eine mittig verlaufende nicht gezeichnete Achse zugeordnet. Gleiche Bezugsziffern in den Figuren bezeichnen die gleichen Teile.

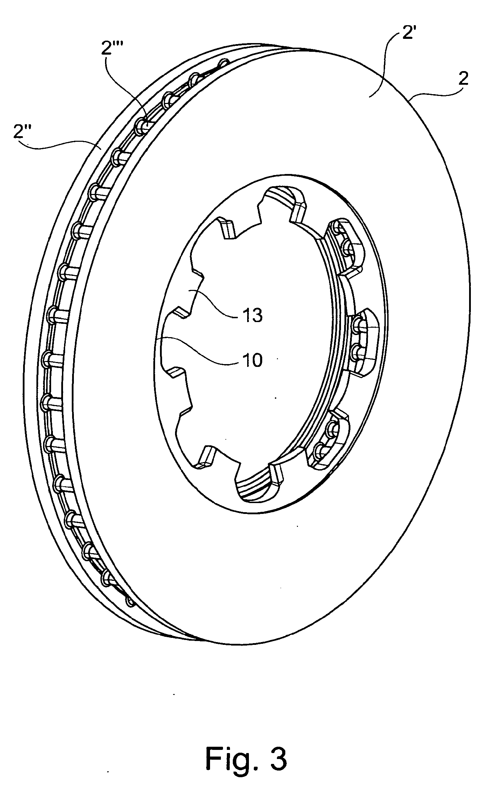

Figur 3 zeigt, dass der einstückige, innengekühlte Reibring 2 aus Grauguß aus zwei Reibscheiben 2', 2" besteht, mit dazwischen liegenden, diese verbindenden Kühlluftführungen 2'" wobei sich Zentrier- und Befestigungsfortsätze 13 des Reibrings 2 an nur einer Reibscheibe 2' befinden und zwar an derjenigen, die nach der Montage dem Bremsscheibentopf 3 aus einer Leichtmetalllegierung zugewandt ist. Dieser erstreckt sich, vom Reibring 2 aus gesehen, im Wesentlichen in eine Richtung (Figur 3).

Die Bremsscheibe 1 für eine Scheibenbremse besteht aus einem Bremsscheibentopf 3 und einem daran befestigten Reibring 2, der mit acht von seinem Innendurchmesser 10 nach innen gerichteten Zentrier- und Befestigungsfortsätzen 13 in axialer Richtung stirnseitig auf Zentrieransätze des Bremsscheibentopfs 3 aufgesetzt ist. Die Zentrieransätze des Bremsscheibentopfs 3 sind als Ausnehmungen 11 im Bremsscheibentopfrand 5 und im Bremsscheibentopfmantel 6 ausgeführt, in die jeweils ein Zentrier- und Befestigungsfortsatz 13 des Reibrings 2 hineinragt. Aufliegend auf den acht Zentrier- und Befestigungsfortsätzen 13 des Reibrings 2, die die Ausnehmungen 11 um 0,5 mm in axialer Richtung am reibringseitigen Ende des Bremsscheibentopfes 3 überragen, ist ein Befestigungsring 7, an den zwischen den Zentrier- und Befestigungsfortsätzen 13 liegenden Kreisringelementen 8 des Bremsscheibentopfrandes 5 mittels in axialer Richtung verlaufenden Nieten 4 befestigt. Der Befestigungsring 7 verläuft über den gesamten Bremsscheibentopfrand 5 und deckt dessen Ausnehmungen 11 mit den Zentrier- und Befestigungsfortsätzen 13 des Reibrings 2 und die dazwischen liegenden Kreisringelemente 8 des Bremsscheibentopfrandes 5 ab. Wenigstens in axialer Richtung werden dadurch Bremsscheibentopf 3 und Reibring 2 aneinander festgelegt, wobei in radialer Richtung eine Art schwimmende Lagerung entsteht, die unterschiedliche radiale Ausdehnungsbewegungen aufgrund einer Erhitzung der Bremsscheibe 1 zulässt, ohne zu große Spannungen zwischen Bremsscheibentopf 3 und Reibring 2 aufzubauen. Dies ist auch dadurch bedingt, dass die Zentrier- und Befestigungsfortsätze 13 des Reibrings 2 mit den Ausnehmungen 11 im Bremsscheibentopf 3 in Umfangsrichtung eine Spielpassung bilden.

Dadurch, dass die Ausnehmungen 11 im Bremsscheibentopf 3 in axialer Richtung 0,5 mm weniger tief sind als die Tiefe der Zentrier- und Befestigungsfortsätze 13 in axialer Richtung, wellt sich der Befestigungsring 7 bei seiner Vernietung mit dem Bremscheibentopfrand 5, was die Befestigungsverbindung in axialer Richtung spielfrei und in geringem Maße nachgiebig macht.

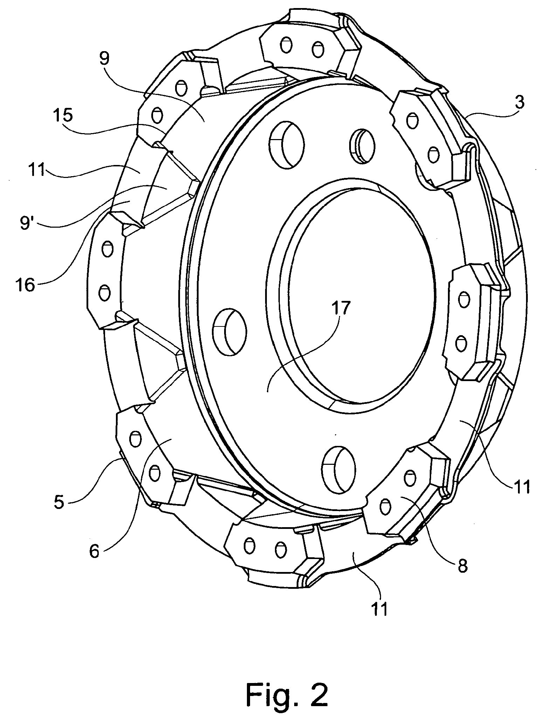

Figur 2 zeigt, dass der Bremsscheibentopf 3 derart gestaltet ist, dass keinerlei Hinterschnitte vorhanden sind und dieser somit einfach durch zwei entsprechende Formhälften gießtechnisch aus Leichtmetall hergestellt werden kann. Der Bremsscheibentopfmantel 6 ist durch eine, sich in radialer Richtung erstreckende, Topfscheibe 17 am vom Reibring 2 entfernteren Ende des Bremsscheibentopfmantels 6 versteift.

Der im Wesentlichen zylindrische Bremsscheibentopfmantel 6 besteht aus in Umfangsrichtung aneinander gereihten, abwechselnd um 180 Winkelgrad verdrehten Segmenten 9, 9' in der Form von gebogenen symmetrischen Trapezen, die mit abwechselnd verschiedenem radialen Abstand zur nicht gezeichneten Mittenlängsachse des Bremsscheibentopfmantels 6 regelmäßig angeordnet sind. Dabei liegen am Bremsscheibentopfrand 5 die kurzen Seiten 15 der symmetrischen Trapeze 9 jeweils bei den Befestigungsmitteln für den Befestigungsring 7, den Nieten 4, und diese symmetrischen Trapeze 9 haben den geringeren Abstand zur Mittenlängsachse des Bremsscheibentopfmantels 6. Die langen Seiten 16 der symmetrischen Trapeze 9'am Bremsscheibentopfrand 5 liegen dagegen jeweils bei den Ausnehmungen 11 im Bremsscheibentopfrand 5 und diese symmetrischen Trapeze 9' haben den größeren Abstand zur Mittenlängsachse des Bremsscheibentopfmantels 6.

Die trapezförmigen Segmente 9, 9' des Bremsscheibentopfmantels 6 stellen Schubfelder dar, die die Gestaltfestigkeit erhöhen, bei gleichzeitiger Gewichtsreduktion durch Materialeinsparung.

## Patentansprüche

1. Bremsscheibentopf (3) mit einem zylindrischen Bremsscheibentopfmantel (6) ohne Durchbrechungen **dadurch gekennzeichnet, dass** der Bremsscheibentopfmantel (6) aus in Umfangsrichtung aneinander gereihten, abwechselnd um 180 Winkelgrad verdrehten Segmenten (9, 9') in der Form von gebogenen symmetrischen Trapezen besteht, die mit abwechselnd verschiedenem radialen Abstand zur Mittenlängsachse des Bremsscheibentopfmantels (6) regelmäßig angeordnet sind.

2. Bremsscheibentopf (3) nach Anspruch 1, **dadurch gekennzeichnet, dass** an einem Bremsscheibentopfrand (5) kurze Seiten (15) der symmetrischen Trapeze (9) jeweils bei Befestigungsmitteln für einen Befestigungsring (7) zur Befestigung eines Reibrings (2) liegen und diese symmetrischen Trapeze (9) den geringeren Abstand zur Mittenlängsachse des Bremsscheibentopfmantels (6) haben, und dass am Bremsscheibentopfrand (5) die langen Seiten (16) der symmetrischen Trapeze (9') jeweils bei Ausnehmungen (11) im Bremsscheibentopfrand (5) für Befestigungsfortsätze (13) des Reibrings (2) liegen und diese symmetrischen Trapeze (9') den größeren Abstand zur Mittenlängsachse des Bremsscheibentopfmantels (6) haben.

3. Bremsscheibentopf (3) nach einem der Ansprüche 1 oder 2, **dadurch gekennzeichnet, dass** der Bremsscheibentopfmantel (6) mindestens durch eine, sich in radialer Richtung erstreckende, Topfscheibe (17) versteift ist, insbesondere am vom Reibring (2) entfernteren Ende des Bremsscheibentopfmantels (6).

4. Bremsscheibentopf (3) nach einem der Ansprüche 1 bis 3, **dadurch gekennzeichnet, dass** dieser aus einer Leichtmetalllegierung besteht.

## Claims

1. A brake disc pot (3) having a cylindrical brake disc pot jacket (6) without openings, **characterised in that** the brake disc pot jacket (6) comprises segments (9, 9') which are aligned next to one another in the circumferential direction, they are alternately rotated by 180 angular degrees and are in the form of curved symmetrical trapeziums which are arranged regularly at an alternately differing radial distance from the centre longitudinal axis of the brake disc pot jacket (6).

2. A brake disc pot (3) according to claim 1, **characterised in that** on one edge (5) of the brake disc pot, short sides (15) of the symmetrical trapeziums (9) are respectively located at fastening means for a fastening ring (7) for fastening a friction ring (2) and these symmetrical trapeziums (9) are at a relatively short distance from the centre longitudinal axis of the brake disc pot jacket (6), and **in that** on the edge (5) of the brake disc pot, the long sides (16) of the symmetrical trapeziums (9') are respectively located at recesses (11) in the edge (5) of the brake disc pot for fastening extensions (13) of the friction ring (2) and these symmetrical trapeziums (9') are at a relatively great distance from the centre longitudinal axis of the brake disc pot jacket (6).

3. A brake disc pot (3) according to either claim 1 or claim 2, **characterised in that** the brake disc pot jacket (6) is reinforced at least by a pot disc (17) which extends in the radial direction, more especially at the end of the brake disc pot jacket (6) relatively remote from the friction ring (2),

4. A brake disc pot (3) according to any one of claims 1 to 3, **characterised in that** the brake disc pot comprises a light metal alloy.

## Revendications

1. Cloche de disque de frein (3) ayant une enveloppe de cloche de disque de frein cylindrique (6) sans ouvertures,
**caractérisée en ce que**
l'enveloppe (6) de la cloche de disque de frein est constituée de segments (9, 9') en forme de trapèzes courbes symétriques alignés dans la direction périphérique et alternativement tournés de 180 degrés, qui sont positionnés régulièrement avec alternativement différentes distances radiales par rapport à l'axe longitudinal médian de l'enveloppe de la cloche de disque de frein (6).

2. Cloche de disque de frein (3) conforme à la revendication 1,
**caractérisée en ce que**
sur un bord (5) de la cloche de disque de frein sont positionnés les petits côtés (15) des trapèzes symétriques (9) respectivement avec des moyens de fixation d'une bague de fixation (7), permettant de fixer une bague de friction (2), et ces trapèzes symétriques (9) sont à la plus faible distance de l'axe longitudinal médian de l'enveloppe de la cloche de disque de frein (6), et sur le bord (5) de la cloche de disque de frein (6) sont positionnés les grands côtés (16) des trapèzes symétriques (9'), respectivement avec des évidements (11) du bord (5) de la cloche de disque de frein pour des prolongements de fixation (13) de la bague de friction (2), et ces trapèzes symétriques (9') sont à la plus grande distance de l'axe longitudinal médian de l'enveloppe de la cloche de disque de frein (6).

3. Cloche de disque de frein (3) conforme à l'une des revendications 1 et 2,
**caractérisée en ce que**
l'enveloppe de la cloche de disque de freins (6) est rigidifiée au moins par un disque de cloche (17) s'étendant en direction radiale, en particulier à l'extrémité de l'enveloppe de la cloche de disque de frein (6) la plus éloignée de la bague de friction (2).

4. Cloche de disque de frein (3) conforme à l'une des revendications 1 à 3,
**caractérisée en ce qu'**
elle est réalisée en un alliage en métal léger.
